# EUROPÄISCHE PATENTSCHRIFT

(11) **EP 4 448 261 B1**
(45) Veröffentlichungstag und Bekanntmachung des Hinweises auf die Patenterteilung: **21.01.2026**
(21) Anmeldenummer: 21836340.6
(22) Anmeldetag: 16.12.2021
(51) Int. Cl.: B29D 30/06, B60C 13/00, B60C 13/02

(54) **FAHRZEUGLUFTREIFEN**
PNEUMATIC VEHICLE TYRE
PNEU DE VÉHICULE

(43) Veröffentlichungstag der Anmeldung: 23.10.2024
(73) Patentinhaber: Continental Reifen Deutschland GmbH, 30175 Hannover (DE)
(72) Erfinder: KRISTEN, Florian, 30175 Hannover (DE); LUTZ, André, 30175 Hannover (DE); VOLKMANN, Ute, 30175 Hannover (DE)
(74) Vertreter: Continental Corporation
(86) Internationale Anmeldenummer: PCT/DE2021/200264
(87) Internationale Veröffentlichungsnummer: WO 2023/109992

(56) Entgegenhaltungen:
- EP-A1- 4 005 783
- DE-A1- 102017 214 556
- DE-T5- 112019 005 907
- US-A- 6 123 131
- US-B2- 10 960 622

## Beschreibung

Die Erfindung betrifft einen Fahrzeugluftreifen mit einem Laufstreifen mit Schulterflanken, Seitenwänden und Wulstbereichen, welcher Reifen in einer Vulkanisationsform mit mehreren, in radialer Richtung bewegbar angeordneten Segmenten eines Segmentringes zur Ausbildung des Laufstreifens und der Schulterflanken, mit Seitenwandschalen zur Ausbildung der Außenseiten der Seitenwände und mit Formtrennungen zwischen den Segmenten und den Seitenwandschalen vulkanisiert ist, wobei die Schulterflanken mitsamt jenen Bereichen, welche mit den Positionen der Formtrennungen korrespondieren, an die Außenseiten der Seitenwände stetig anschließen, sodass die Schulterflanken mit den Außenseiten der Seitenwände fluchten.

Die Erfindung betrifft ferner einen Fahrzeugluftreifen, wie unmittelbar nach der Vulkanisation in einer Vulkanisationsform ausgebildet, welche Vulkanisationsform mit mehreren, in radialer Richtung bewegbar angeordneten Segmenten eines Segmentringes zur Ausbildung des Laufstreifens mit Schulterflanken, mit Seitenwandschalen zur Ausbildung der Seitenwände und mit Formtrennungen zwischen den Segmenten und den Seitenwandschalen versehen ist, wobei an der Außenseite des Reifens entlang jener Bereiche, welche mit den Positionen der Formtrennungen korrespondieren, in Umfangsrichtung umlaufende, durch eine radial innere und eine radial äußere Rippenflanke begrenzte Rippen ausgebildet sind und wobei die Schulterflanken mit den radial innerhalb der Rippen befindlichen Außenseiten, durch die Rippen unterbrochen, fluchten, wobei die Rippenflanken der Rippen im radialen Schnitt nach innen, vorzugsweise kreisbogenförmig, gewölbt sind.

Fahrzeugluftreifen der eingangs genannten Art sind beispielsweise aus der DE 10 2014 212 346 A1 bekannt. Der Fahrzeugluftreifen wird in einer Vulkanisationsform vulkanisiert, welche entlang der Formtrennungen umlaufende Rippen ausbildet, die einen V-förmigen oder einen kuppelförmigen Querschnitt mit scharfen Ecken an den Schulterflanken und den Seitenwänden aufweisen. Beim Schließen der Vulkanisationsform und beim Vulkanisieren des Rohreifens dringt Gummimaterial in den Bereich der Formtrennung zwischen den im geschlossenen Zustand der Vulkanisationsform auf den Seitenwandschalen anliegenden Segmenten ein und bildet auf den Rippenspitzen Austriebe als kurze dünne Gummifilme aus. Die umlaufenden Rippen werden mitsamt den Austrieben am fertig vulkanisierten Reifen vor dessen Auslieferung komplett abgeschnitten. Das Abschneiden der Rippen hinterlässt an der Reifenseiten kaum sichtbare schmale umlaufende Streifen mit einer Außenfläche, die glatter ist als jene der anschließenden Schulterflanken und jene der anschließenden Seitenwände.

Die den Reifen gemäß der DE 10 2014 212 346 A1 ausformende Vulkanisationsform weist an der Forminnenseite entlang der Formtrennung Vertiefungen mit Vertiefungsflanken auf, von welchen die eine an den Profilringsegmenten und die andere an der jeweiligen Seitenwandschale vorgesehen ist. Die Formtrennung beginnt daher am Boden dieser Vertiefungen. Die derart am Fahrzeugluftreifen ausgebildeten Rippen, welche auch als Beschneiderippen bezeichnet werden, enthalten ein gewisses Gummivolumen und bewirken durch ihre Ecken an der Reifenaußenseite beim Abtrennen vom Gummimaterial der Seitenwände und der Schulterflanken immer wieder Einrisse im Gummimaterial.

Ein Fahrzeugluftreifen, wie unmittelbar nach der Vulkanisation in einer Vulkanisationsform ausgebildet und wie eingangs genannt, ist beispielsweise aus der DE 11 2019 005 907 T5 bekannt. Dieser Fahrzeugluftreifen weist an seiner Außenseite entlang jener Bereiche, welche mit den Positionen der Formtrennungen korrespondieren, in Umfangsrichtung umlaufende, durch eine radial innere und eine radial äußere Rippenflanke begrenzte Rippen auf, wobei die Schulterflanken mit den radial innerhalb der Rippen befindlichen Außenseiten, durch die Rippen unterbrochen, fluchten und die Rippenflanken im radialen Schnitt nach innen gewölbt sind. Die Rippenflanken verlaufen, im radialen Schnitt betrachtet, vorzugsweise jeweils entlang eines Kreisbogens mit einem Radius, wobei der Radius des Kreisbogens der radial inneren Rippenflanke 0,3 mm bis 2,0 mm und der Radius des Kreisbogens der radial äußeren Rippenflanke 0,5 mm bis 5,0 mm beträgt.

Aus der EP 4 005 783 A1, welche Stand der Technik nach Art 54(3) EPÜ bildet, ist ein weiterer Fahrzeugluftreifen der eingangs genannten Art, wie unmittelbar nach der Vulkanisation in einer Vulkanisationsform ausgebildet, bekannt. Den radial nach innen gewölbten Rippenflanken der Rippe liegt, im radialen Schnitt betrachtet, jeweils ein Kreisbogen mit einem Radius zugrunde, wobei der Radius des Kreisbogens der radial äußeren Rippenflanke das 1,2- bis 2,0-Fache des Radius des Kreisbogens der radial inneren Rippenflanke beträgt. Die im rechten Winkel zur Schulterflanke ermittelte Höhe der Rippe weist ein definiertes Verhältnis zu den Radien der Rippenflanken auf.

Die DE 10 2017 214 556 A1 offenbart einen Fahrzeugluftreifen mit einem Laufstreifen mit Schulterabschnitten, deren Außenkontur jeweils insgesamt entlang einer Rundung verläuft und an welche Seitenwände anschließen, wobei an der Grenze zwischen den Schulterabschnitten und den Seitenwänden jeweils eine kreisförmig umlaufende Kante vorhanden ist, die entlang der Formtrennung der Vulkanisationsform verläuft. Die Kante ist zwischen dem Ende des Schulterabschnittes des Laufstreifens und einer konkav nach innen gekrümmt verlaufenden Übergangsrundung zur Seitenwand gebildet, sodass die Seitenwand gegenüber dem Schulterabschnitt nach innen versetzt ist. Ein solche Rippe lässt sich nach der Vulkanisation sauber abschneiden.

Aus der US 10 960 622 B2 ist eine Vulkanisationsform für einen Fahrzeugluftreifen bekannt, wobei die Seitenwandschalen und/oder die Segmente des Profilringes je eine an die Formtrennung angrenzende Vertiefung umfassen. Ferner sind in den Seitenwandschalen und den Segmenten des Profilringes Rillen ausgebildet, welche bei geschlossener Vulkanisationsform über die Formtrennung hinweg fluchtend miteinander verlaufen und die Entlüftung der Vulkanisationsform verbessern sollen.

Aus der US 6 123 131 A ist ein Nutzfahrzeugreifen mit Seitenwänden mit Rippen bekannt, welche jeweils zwei nach innen gewölbte Rippenflanken aufweisen und derart ausgelegt sind, dass diese einen guten Schutz ermöglichen und zum Gewicht des Reifens kaum betragen.

Seitenwandbeschriftungen und Seitenwanddesigns werden bei der Vulkanisation des Reifens über die Seitenwandschalen auf die Seitenwände übertragen. In letzter Zeit werden Seitenwandbeschriftungen und Seitenwanddesigns bevorzugt als seichte Vertiefungen in das Gummimaterial der Seitenwände eingeprägt. Erwünscht ist eine optisch einheitliche und einwandfreie Ausgestaltung der seitlichen Außenseiten der Reifen, ohne Vorsprünge und Stufen sowie unter Sicherstellung der Möglichkeit, Seitenwandbeschriftungen und Seitenwanddesigns in das Gummimaterial als Vertiefungen mit geringem Materialaufwand einprägen zu können.

Der Erfindung liegt daher die Aufgabe zu Grunde, Reifen mit einer optisch einheitlichen Ausgestaltung der Reifenseiten zur Verfügung zu stellen, vor allem unter Bedachtnahme auf einen geringen Materialaufwand und dabei auf die Möglichkeit, den Reifen mit vertieften Seitenwandbeschriftungen und/oder Seitenwanddesigns herzustellen.

Gelöst wird die gestellte Aufgabe mit einem Fahrzeugluftreifen, bei welchem radial innerhalb der Bereiche, welche mit den Positionen der Formtrennungen korrespondieren, jeweils unmittelbar ein Abschnitt der Seitenwand anschließt, welcher bei seitlicher Sicht auf den Reifen eine kreisringförmig umlaufende ebene Fläche mit einer radialen Erstreckung von 10,00 mm bis 25,00 mm bildet und welcher in die Außenseite eines einen 0,50 mm bis 1,50 mm dünnen Materialaufschlag aufweisenden und im radialen Schnitt nach außen kreisbogenförmig gekrümmten weiteren Abschnittes der Seitenwand tangential übergeht.

Durch diese Ausgestaltung wird das Ausbilden von Stufen am Übergang zum Materialaufschlag, welcher das Einprägen von vertieften Seitenwandbeschriftungen und/oder Seitenwanddesigns ermöglicht, vermieden und gleichzeitig kann der Materialaufwand für den Materialaufschlag auf das gerade erforderliche Ausmaß beschränkt werden. Insgesamt lassen sich dadurch der Rollwiderstand und der Luftwiderstand des Reifens verringern.

Was den Fahrzeugluftreifen, wie er unmittelbar nach der Vulkanisation in einer Vulkanisationsform ausgebildet ist, betrifft, wird die gestellte Aufgabe dadurch gelöst, dass radial innerhalb der Rippen jeweils unmittelbar ein Abschnitt der Seitenwand anschließt, welcher bei seitlicher Sicht auf den Reifen eine kreisringförmig umlaufende ebene Fläche mit einer radialen Erstreckung von 10,00 mm bis 25,00 mm bildet und welcher in die Außenseite eines durch einen 0,50 mm bis 1,50 mm dünnen Materialaufschlag gebildeten und im radialen Schnitt nach außen kreisbogenförmig gekrümmten weiteren Abschnitt der Seitenwand tangential übergeht.

Die Beschneiderippen sind daher mit einem gegenüber dem Stand der Technik gemäß der DE 10 2014 212 346 A1 geringerem Materialaufwand ausbildbar, wobei die Wölbung der Rippenflanken nach innen einen sanft gerundeten Übergang der Rippenflanken in die Schulterflanken und die Seitenwände ermöglichen und beim nachfolgenden Abtrennen der Rippen dafür sorgen, dass keine Einrisse mehr am Gummimaterial der Seitenwand bzw. der Schulterflanke des Reifens entstehen.

In dem nach außen kreisbogenförmig gekrümmten weiteren Abschnitt der Seitenwand sind Seitenwandbeschriftungen, Seitenwanddesigns und dergleichen als Vertiefungen bei der Vulkanisation des Reifens eingeprägt worden.

Bei einer bevorzugten Ausführung ist der erfindungsgemäße Fahrzeugluftreifen ein Nutzfahrzeugreifen, bei welchem dem kreisbogenförmig gekrümmten weiteren Abschnitt der Seitenwand ein Kreisbogen mit einem Radius von 150,00 mm bis 200,00 mm zugrunde liegt. Bei Nutzfahrzeugreifen wirkt sich die durch die Materialeinsparung und der durch die besondere Ausgestaltung erzielbare geringere Luftwiderstand der Reifen besonders vorteilhaft aus.

Der kreisbogenförmig gekrümmte weitere Abschnitt der Seitenwand erstreckt sich bei einer bevorzugten Ausführung bis zum oder nahezu bis zum Wulstbereich. Ohne Beeinträchtigung einer einheitlichen Ausgestaltung der Seitenwände kann somit ein relativ großer Bereich der Seitenwände mit Seitenwandbeschriftungen oder Seitenwanddesigns in Form von Vertiefungen versehen sein.

Beim Fahrzeugluftreifen, wie er unmittelbar nach der Vulkanisation in einer Vulkanisationsform ausgebildet ist, ist es von besonderem Vorteil, wenn die Rippenflanken der Rippen sowohl in die Schulterflanken als auch in die Außenseiten der Seitenwände tangential übergehen. Dadurch ist ein besonders sauberes und weitgehend rückstandsfreies Abtrennen der Rippen vor der Auslieferung der Reifen möglich.

In diesem Zusammenhang ist es vorteilhaft, wenn der kreisbogenförmigen Krümmung der radial äußeren Rippenflanke ein Kreisbogen mit einem Radius zugrunde liegt, der um insbesondere mindestens 0,20 mm größer ist als der Radius jenes Kreisbogens, welcher der kreisbogenförmigen Krümmung der radial inneren Rippenflanke zugrunde liegt, wobei der kreisbogenförmigen Krümmung der radial äußeren Rippenflanke ein Kreisbogen mit einem Radius zugrunde liegt, der 1,30 mm bis 2,50 mm beträgt, und wobei der kreisbogenförmigen Krümmung der radial inneren Rippenflanke ein Kreisbogen mit einem Radius zugrunde liegt, der 1,10 mm bis 1,50 mm beträgt.

Ein sauberes und einwandfreies Abtrennen der Rippen wird ferner insbesondere dadurch unterstützt, dass die Rippen eine Höhe von 1,00 mm bis 2,50 mm, insbesondere von 1,30 mm bis 1,70 mm, aufweisen.

Bei einer bevorzugten Ausführung des Fahrzeugluftreifen, wie er unmittelbar nach der Vulkanisation in einer Vulkanisationsform ausgebildet ist, liegt dem kreisbogenförmig gekrümmten weiteren Abschnitt der Seitenwand, wenn der Reifen ein Nutzfahrzeugreifen ist, ein Kreisbogen mit einem Radius von 150,00 mm bis 200,00 mm zugrunde.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 einen Ausschnitt eines radialen Querschnittes eines Fahrzeugluftreifens unmittelbar nach der Vulkanisation in einer Vulkanisationsform,
Fig. 2 das Detail D aus Fig. 1 in vergrößerter Darstellung und
Fig. 3 einen Ausschnitt eines radialen Querschnittes eines Segmentes eines Profilringes und einer an dieses anschließenden Seitenwandschale einer Vulkanisationsform eines Fahrzeugluftreifens.

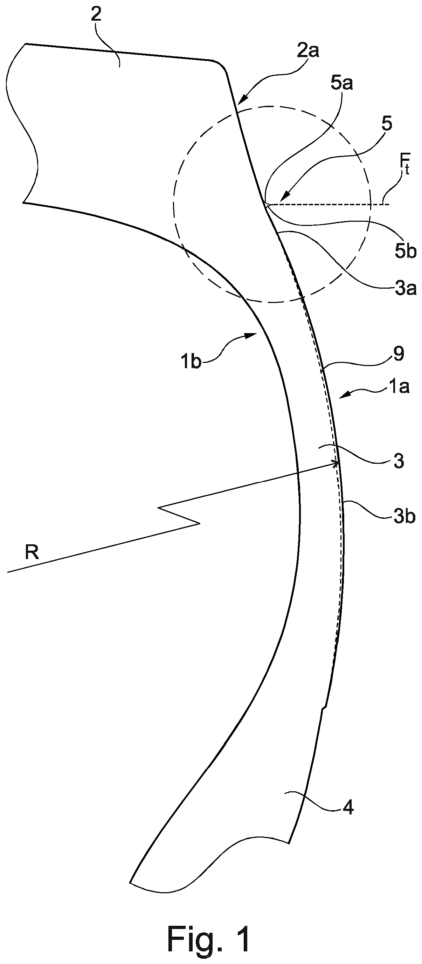

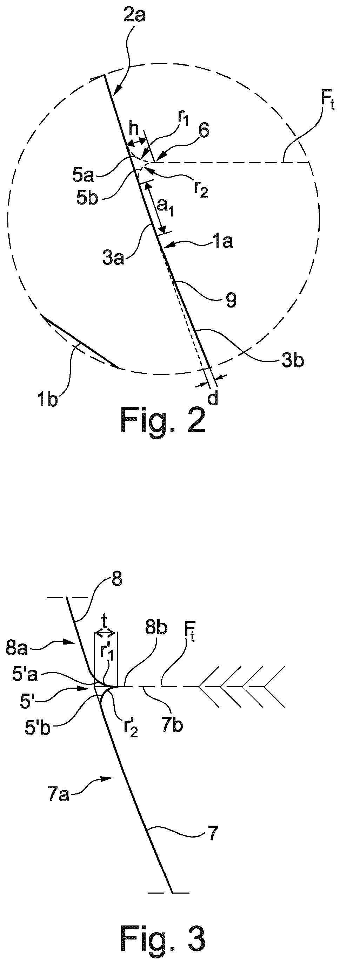

Die Schnittansicht in Fig. 1 und das Detail D gemäß Fig. 2 zeigen schematisch die Kontur der Außenseite 1a und die Kontur der Innenseite 1b eines Abschnittes eines Fahrzeugluftreifens, welcher beispielhaft ein Nutzfahrzeugreifen ist. Die Erfindung ist jedoch gleichermaßen bei Reifen anderer Typen, beispielsweise Reifen für Personenkraftwagen, Vans, Light-Trucks oder bei Industriereifen anwendbar. Gezeigt sind ein Teil eines Laufstreifens 2 mit einer Schulterflanke 2a, ferner eine Seitenwand 3 und ein Wulstbereich 4. Die weiteren, üblicherweise vorgesehenen Reifenbauteile sind nicht dargestellt und können in bekannter Weise ausgeführt sein.

Unmittelbar nach der Vulkanisation des Reifens in einer Vulkanisationsform befindet sich am radial inneren Ende der Schulterflanke 2a an der Außenseite 1a des Fahrzeugluftreifens eine in Fig. 1 und Fig. 2 gestrichelt eingezeichnete und zwei spitz zusammenlaufende Rippenflanken 5a, 5b aufweisende Rippe 5, die in der Vulkanisationsform im Bereich der Formtrennung Ft zwischen einer Seitenwandschale und Segmenten eines Profilringes, wie noch anhand der Fig. 3 beschrieben wird, ausgebildet worden ist. Die Position der Formtrennung Ft ist in Fig. 1 und Fig. 2 durch eine Linie angedeutet. Die Rippe 5 umläuft in Umfangsrichtung die Seitenwand 3, an ihrer Spitze befindet sich ein bei der Vulkanisation des Reifens als dünner Gummifilm 6 ausgebildeter Austrieb. Die Außenseite 1a des Reifens ist im Bereich um die Rippe 5 derart gestaltet, dass die Schulterflanke 2a mit einem radial innerhalb der Rippe 5 unmittelbar anschließenden Abschnitt 3a der Außenseite 1a im Bereich der Seitenwand 3 fluchtet. Der radial innerhalb der Rippe 5 unmittelbar anschließende Abschnitt 3a der Seitenwand 3 ist als, bei seitlicher Sicht auf den Reifen, kreisringförmig umlaufende ebene Fläche mit einer radialen Erstreckung a₁ von jeweils 10,00 mm bis 25,00 mm, je nach Reifendimension und Reifentyp, ausgebildet. Der Abschnitt 3a geht über einen tangentialen Übergang in einen durch einen 0,50 mm bis 1,50 mm dünnen (Dicke d in Fig. 2) Materialaufschlag 9 - gegenüber der gestrichelten Linie in Fig. 2 - gebildeten und nach außen mit einem Radius R kreisbogenförmig gekrümmten weiteren Abschnitt 3b der Seitenwand 3 über, auf welchem in bekannter Weise eine vertiefte, daher eingeprägte Seitenwandbeschriftung und/oder ein vertieftes Seitenwanddesign ausgebildet sein kann. Bei einem Nutzfahrzeugreifen beträgt der Radius R in der Größenordnung von 150,00 mm bis 200,00 mm. Der Materialaufschlag 9 ist außerhalb des tangentialen Überganges und gegenüber dem Abschnitt 3a eine insbesondere eine konstante Dicke d aufweisende Verdickung des Gummimaterials im Abschnitt 3a.

Die Rippenflanken 5a, 5b sind im radialen Schnitt nach innen und daher konkav gekrümmt, insbesondere als Kreisbögen, die von der Spitze der Rippe 5 ausgehend bis auf das Niveau der Schulterflanke 2a bzw. des Abschnittes 3a reichen und knickfrei, insbesondere tangential, in diese Abschnitte übergehen. Der kreisbogenförmigen Krümmung der radial äußeren Rippenflanke 5a liegt ein Kreisbogen mit einem Radius r₁ von 1,30 mm bis 2,50 mm zugrunde, der kreisbogenförmigen Krümmung der radial inneren Rippenflanke 5b liegt ein Kreisbogen mit einem Radius r₂ von 1,10 mm bis 1,50 mm zugrunde, wobei r₂ um mindestens 0,20 mm kleiner ist als r₁. Die Rippe 5 weist eine Höhe h auf, die im rechten Winkel zu einer die Schulterflanke 2a mit dem Abschnitt 3a verbindenden geraden Linie ermittelt wird und 1,00 mm bis 2,50 mm, insbesondere 1,30 mm bis 1,70 mm, beträgt. Die Rippen 5 werden nach der Vulkanisation des Reifens und vor seiner Auslieferung mitsamt dem Gummifilm 6 mit einem Trimmmesser von Hand aus oder automatisch abgetrennt bzw. abgeschnitten.

Der Fahrzeugluftreifen wird in einer Vulkanisationsform vulkanisiert, die einen den Laufstreifen ausformenden Profilring aus einer Anzahl von in radialer Richtung bewegbaren Segmenten und in axialer Richtung bewegbare Seitenwandschalen aufweist. Fig. 3 zeigt schematisch den Verlauf der Innenseite 7a einer Seitenwandschale 7 und der Innenseite 8a des anschließenden Segmentes 8 des Profilringes. Im geschlossenen Zustand der Vulkanisationsform liegt eine Begrenzungsfläche 8b der Segmente 8 an einer Begrenzungsfläche 7b der Seitwandschale 7 dicht und unter Bildung der Formtrennung Ft an. Im dargestellten Ausschnitt formt das Segment 8 die Schulterflanke 2a des Fahrzeugluftreifens aus, die Seitenwandschale 7 die Abschnitte 3a und 3b auf der Seitenwand 3. Am forminnenseitigen Ende und entlang der Formtrennung Ft ist eine Vertiefung 5' ausgebildet, welche von zwei Vertiefungsflanken 5'a und 5'b begrenzt ist, von welchen die eine an den Segmenten 8 und die andere an der Seitenwandschale 7 ausgebildet ist. Nachdem die Vertiefung 5' die Rippe 5 am Reifen ausformt, sind die Vertiefungsflanken 5'a und 5'b konvex, also nach außen, gekrümmt, insbesondere kreisbogenförmig mit Radien r₁' und r₂' analog zu den Radien r₁ und r₂ und insbesondere unter Bildung von tangentialen Übergängen zu den Innenseiten der Segmente 8 und der Seitenwandschale 7. Die Vertiefungen 5' weisen eine Tiefe t von 1,00 mm bis 2,50 mm, insbesondere von 1,30 mm bis 1,70 mm, auf.

In Folge dieser Ausgestaltung der Vulkanisationsform weist ein in dieser vulkanisierter Fahrzeugluftreifen unmittelbar nach der Vulkanisation und der Entnahme aus der Form an seinen Seiten jeweils eine umlaufende Rippe 5 mit an ihrer Spitze filmartig wegstehenden Austrieben auf.

### Bezugszeichenliste

- 1a: Außenseite
- 1b: Innenseite
- 2: Laufstreifen
- 2a: Schulterflanke
- 3: Seitenwand
- 3a: Abschnitt
- 3b: Abschnitt
- 4: Wulstbereich
- 5: Rippe
- 5': Vertiefung
- 5a, 5b: Rippenflanke
- 5'a, 5'b: Vertiefungsflanke
- 6: Gummifilm
- 7: Seitenwandschale
- 7a: Innenseite
- 7b: Begrenzungsfläche
- 8: Segment
- 8a: Innenseite
- 8b: Begrenzungsfläche
- 9: Materialaufschlag
- a₁: radiale Erstreckung
- D: Detail
- d: Dicke
- r₁, r₂: Radius
- r₁', r₂': Radius
- R: Radius
- Ft: Formtrennung
- t: Tiefe
- h: Höhe

## Patentansprüche

1. Fahrzeugluftreifen mit einem Laufstreifen (2) mit Schulterflanken (2a), Seitenwänden (3) und Wulstbereichen (4), welcher Reifen in einer Vulkanisationsform mit mehreren, in radialer Richtung bewegbar angeordneten Segmenten (8) eines Segmentringes zur Ausbildung des Laufstreifens (2) und der Schulterflanken (2a), mit Seitenwandschalen (7) zur Ausbildung der Außenseiten der Seitenwände (3) und mit Formtrennungen (Fₜ) zwischen den Segmenten (8) und den Seitenwandschalen (7) vulkanisiert ist, wobei die Schulterflanken (2a) mitsamt jenen Bereichen, welche mit den Positionen der Formtrennungen (Ft) korrespondieren, an die Außenseiten der Seitenwände (3) stetig anschließen, sodass die Schulterflanken (2a) mit den Außenseiten der Seitenwände (3) fluchten, **dadurch gekennzeichnet,**
**dass** radial innerhalb der Bereiche, welche mit den Positionen der Formtrennungen (Ft) korrespondieren, jeweils unmittelbar ein Abschnitt (3a) der Seitenwand (3) anschließt, welcher bei seitlicher Sicht auf den Reifen eine kreisringförmig umlaufende ebene Fläche mit einer radialen Erstreckung (a₁) von 10,00 mm bis 25,00 mm bildet und welcher in die Außenseite eines einen 0,50 mm bis 1,50 mm dünnen Materialaufschlag (9) aufweisenden und im radialen Schnitt nach außen kreisbogenförmig gekrümmten weiteren Abschnittes (3b) der Seitenwand (3) tangential übergeht.

2. Fahrzeugluftreifen nach Anspruch 1, welcher ein Nutzfahrzeugreifen ist, **dadurch gekennzeichnet, dass** dem kreisbogenförmig gekrümmten weiteren Abschnitt (3b) der Seitenwand (3) ein Kreisbogen mit einem Radius (R) von 150,00 mm bis 200,00 mm zu Grunde liegt.

3. Fahrzeugluftreifen nach Anspruch 1 oder 2, **dadurch gekennzeichnet, dass** sich der kreisbogenförmig gekrümmte weitere Abschnitt (3b) der Seitenwand (3) bis zum oder nahezu bis zum Wulstbereich (4) erstreckt.

4. Fahrzeugluftreifen, wie unmittelbar nach der Vulkanisation in einer Vulkanisationsform ausgebildet, welche Vulkanisationsform mit mehreren, in radialer Richtung bewegbar angeordneten Segmenten (8) eines Segmentringes zur Ausbildung des Laufstreifens (2) mit Schulterflanken (2a), mit Seitenwandschalen (7) zur Ausbildung der Seitenwände (3) und mit Formtrennungen (Ft) zwischen den Segmenten (8) und den Seitenwandschalen (7) versehen ist, wobei an der Außenseite des Reifens entlang jener Bereiche, welche mit den Positionen der Formtrennungen (Ft) korrespondieren, in Umfangsrichtung umlaufende, durch eine radial innere und eine radial äußere Rippenflanke (5a, 5b) begrenzte Rippen (5) ausgebildet sind und wobei die Schulterflanken (2a) mit den radial innerhalb der Rippen (5) befindlichen Außenseiten, durch die Rippen (5) unterbrochen, fluchten, wobei die Rippenflanken (5a, 5b) der Rippen (5) im radialen Schnitt nach innen, vorzugsweise kreisbogenförmig, gewölbt sind,
**dadurch gekennzeichnet,**
**dass** radial innerhalb der Rippen (5) jeweils unmittelbar ein Abschnitt (3a) der Seitenwand (3) anschließt, welcher bei seitlicher Sicht auf den Reifen eine kreisringförmig umlaufende ebene Fläche mit einer radialen Erstreckung (a₁) von 10,00 mm bis 25,00 mm bildet und welcher in die Außenseite eines durch einen 0,50 mm bis 1,50 mm dünnen Materialaufschlag (9) gebildeten und im radialen Schnitt nach außen kreisbogenförmig gekrümmten weiteren Abschnitt (3b) der Seitenwand (3) tangential übergeht.

5. Fahrzeugluftreifen nach Anspruch 4, **dadurch gekennzeichnet, dass** die Rippenflanken (5a, 5b) sowohl in die Schulterflanken (2a) als auch in die Außenseiten der Seitenwände (3) tangential übergehen.

6. Fahrzeugluftreifen nach Anspruch 4 oder 5, **dadurch gekennzeichnet, dass** der kreisbogenförmigen Krümmung der radial äußeren Rippenflanke (5a) ein Kreisbogen mit einem Radius (r₁) zugrunde liegt, der um insbesondere mindestens 0,20 mm größer ist als der Radius (r₂) jenes Kreisbogens, welcher der kreisbogenförmigen Krümmung der radial inneren Rippenflanke (5b) zugrunde liegt, wobei der kreisbogenförmigen Krümmung der radial äußeren Rippenflanke (5a) ein Kreisbogen mit einem Radius (r₁) zugrunde liegt, der 1,30 mm bis 2,50 mm beträgt, und wobei der kreisbogenförmigen Krümmung der radial inneren Rippenflanke (5b) ein Kreisbogen mit einem Radius (r₂) zugrunde liegt, der 1,10 mm bis 1,50 mm beträgt.

7. Fahrzeugluftreifen nach einem der Ansprüche 4 bis 6, **dadurch gekennzeichnet, dass** die Rippen (5) eine Höhe (h) von 1,00 mm bis 2,50 mm, insbesondere von 1,30 mm bis 1,70 mm, aufweisen.

8. Fahrzeugluftreifen nach einem der Ansprüche 4 bis 7, welcher ein Nutzfahrzeugreifen ist, **dadurch gekennzeichnet, dass** dem kreisbogenförmig gekrümmten weiteren Abschnitt (3b) der Seitenwand (3) ein Kreisbogen mit einem Radius (R) von 150,00 mm bis 200,00 mm zu Grunde liegt.

## Claims

1. Pneumatic vehicle tyre with a tread (2) with shoulder flanks (2a), sidewalls (3) and bead regions (4), which tyre is vulcanized in a vulcanizing mould with a plurality of segments (8) of a segment ring that are arranged movably in the radial direction for forming the tread (2) and the shoulder flanks (2a), with sidewall shells (7) for forming the outer sides of the sidewalls (3) and with mould partitions (Ft) between the segments (8) and the sidewall shells (7), wherein the shoulder flanks (2a) together with those regions that correspond to the positions of the mould partitions (Ft) continuously adjoin the outer sides of the sidewalls (3) such that the shoulder flanks (2a) are in line with the outer sides of the sidewalls (3),
**characterized**
**in that**, radially within the regions that correspond to the positions of the mould partitions (Fₜ), in each case there directly adjoins a portion (3a) of the sidewall (3) which, when the tyre is viewed from the side, forms a circumferential flat surface running around in the form of a circular ring, with a radial extent (a₁) of 10.00 mm to 25.00 mm, and which merges tangentially into the outer side of a further portion (3b) of the sidewall (3) which has a thin amount of extra material (9) of 0.50 mm to 1.50 mm and in radial section is curved outwards in the form of a circular arc.

2. Pneumatic vehicle tyre according to Claim 1, which is a commercial vehicle tyre, **characterized in that** the further portion (3b) of the sidewall (3) curved in the form of a circular arc is based on a circular arc with a radius (R) of 150.00 mm to 200.00 mm.

3. Pneumatic vehicle tyre according to Claim 1 or 2, **characterized in that** the further portion (3b) of the sidewall (3) curved in the form of a circular arc extends up to or almost up to the bead region (4).

4. Pneumatic vehicle tyre, as formed immediately after vulcanization in a vulcanizing mould, which vulcanizing mould is provided with a plurality of segments (8) of a segment ring that are arranged movably in the radial direction for forming the tread (2) with shoulder flanks (2a), with sidewall shells (7) for forming the sidewalls (3) and with mould partitions (Ft) between the segments (8) and the sidewall shells (7), wherein, formed on the outer side of the tyre, along those regions that correspond to the positions of the mould partitions (Ft), are ribs (5), which run around in the circumferential direction and are delimited by a radially inner and a radially outer rib flank (5a, 5b), and wherein the shoulder flanks (2a) are in line with the outer sides that are located radially within the ribs (5) and are interrupted by the ribs (5), wherein the rib flanks (5a, 5b) of the ribs (5) are curved inwards in radial section, preferably in the form of a circular arc,
**characterized**
**in that**, radially within the ribs (5), in each case there directly adjoins a portion (3a) of the sidewall (3) which, when the tyre is viewed from the side, forms a circumferential flat surface running around in the form of a circular ring, with a radial extent (a₁) of 10.00 mm to 25.00 mm, and which merges tangentially into the outer side of a further portion (3b) of the sidewall (3) which is formed by a thin amount of extra material (9) of 0.50 mm to 1.50 mm and in radial section is curved outwards in the form of a circular arc.

5. Pneumatic vehicle tyre according to Claim 4, **characterized in that** the rib flanks (5a, 5b) merge tangentially both into the shoulder flanks (2a) and into the outer sides of the sidewalls (3).

6. Pneumatic vehicle tyre according to Claim 4 or 5, **characterized in that** the curvature of the radially outer rib flank (5a) in the form of a circular arc is based on a circular arc with a radius (r₁) which is in particular at least 0.20 mm greater than the radius (r₂) of that circular arc which forms the basis for the curvature of the radially inner rib flank (5b) in the form of a circular arc, wherein the curvature of the radially outer rib flank (5a) in the form of a circular arc is based on a circular arc with a radius (r₁) which is 1.30 mm to 2.50 mm, and wherein the curvature of the radially inner rib flank (5b) in the form of a circular arc is based on a circular arc with a radius (r₂) which is 1.10 mm to 1.50 mm.

7. Pneumatic vehicle tyre according to one of Claims 4 to 6, **characterized in that** the ribs (5) have a height (h) of 1.00 mm to 2.50 mm, in particular of 1.30 mm to 1.70 mm.

8. Pneumatic vehicle tyre according to one of Claims 4 to 7, which is a commercial vehicle tyre, **characterized in that** the further portion (3b) of the sidewall (3) curved in the form of a circular arc is based on a circular arc with a radius (R) of 150.00 mm to 200.00 mm.

## Revendications

1. Pneumatique de véhicule avec une bande de roulement (2) avec des flancs d'épaulement (2a), des parois latérales (3) et des zones de talon (4), lequel pneu est vulcanisé dans un moule de vulcanisation avec plusieurs segments (8), disposés de manière mobile dans une direction radiale, d'une bague de segment pour réaliser la bande de roulement (2) et les flancs d'épaulement (2a), avec des coques (7) de paroi latérale pour réaliser les côtés extérieurs des parois latérales (3) et avec des cloisons de moule (Ft) entre les segments (8) et les coques (7) de paroi latérale, les flancs d'épaulement (2a) conjointement avec ces zones, qui correspondent aux positions des cloisons de moule (Ft), étant toujours situés dans le prolongement des cotés extérieurs des parois latérales (3) si bien que les flancs d'épaulement (2a) sont alignés avec les côtés extérieurs des parois latérales (3), **caractérisé en ce**
**que** radialement à l'intérieur des zones, qui correspondent aux positions des cloisons de moule (Ft), une section (3a) de la paroi latérale (3) est respectivement directement située dans le prolongement, laquelle forme, lorsque le pneu est vu depuis le côté, une surface plane périphérique en forme d'anneau circulaire avec une extension radiale (a₁) de 10,00 mm à 25,00 mm et qui passe tangentiellement dans le côté extérieur d'une autre section (3b) de la paroi latérale (3) présentant un rajout (9) de matériau présentant une fine épaisseur de 0,50 mm à 1,50 mm et incurvée en forme d'arc de cercle vers le haut en coupe radiale.

2. Pneumatique de véhicule selon la revendication 1, lequel est un pneumatique de véhicule utilitaire, **caractérisé en ce qu'**un arc de cercle avec un rayon (R) de 150,00 mm à 200,00 mm est sous-jacent à l'autre section (3b) de la paroi latérale (3) incurvée en forme d'arc de cercle.

3. Pneumatique de véhicule selon la revendication 1 ou 2, **caractérisé en ce que** l'autre section (3b) de la paroi latérale (3) incurvée en forme d'arc de cercle s'étend jusqu'à ou quasiment jusqu'à la zone de talon (4).

4. Pneumatique de véhicule, tel que réalisé directement après la vulcanisation dans un moule de vulcanisation, lequel moule de vulcanisation est pourvu de plusieurs segments (8) d'une bague de segment disposés de manière mobile dans la direction radiale pour réaliser la bande de roulement (2) avec des flancs d'épaulement (2a), avec des coques (7) de paroi latérale pour réaliser les parois latérales (3) et avec des cloisons de moule (Ft) entre les segments (8) et les coques (7) de paroi latérale, des nervures (5) s'étendant dans la direction périphérique, délimitées par un flanc (5a, 5b) de nervure radialement intérieur et radialement extérieur étant réalisées sur le côté extérieur du pneu le long de cette zone, qui correspond aux positions des cloisons de moule (Ft) et les flancs d'épaulement (2a) étant alignés avec les côtés extérieurs se trouvant radialement à l'intérieur des nervures (5) de manière interrompue par les nervures (5), les flancs (5a, 5b) de nervure des nervures (5) étant bombés, de préférence en forme d'arc de cercle, vers l'intérieur en coupe radiale,
**caractérisé en ce**
**qu'**est située dans le prolongement, radialement à l'intérieur des nervures (5), respectivement directement une section (3a) de la paroi latérale (3), laquelle forme, lorsque le pneu est vu depuis le côté, une surface plane périphérique en forme d'anneau circulaire avec une extension radiale (a₁) de 10,00 mm à 25,00 mm et qui passe tangentiellement dans le côté extérieur d'une autre section (3b) de la paroi latérale (3) formée par un rajout (9) de matériau présentant une fine épaisseur de 0,50 mm à 1,50 mm et incurvée en forme d'arc de cercle vers le haut en coupe radiale.

5. Pneumatique de véhicule selon la revendication 4, **caractérisé en ce que** les flancs (5a, 5b) de nervure passent tangentiellement à la fois dans les flancs d'épaulement (2a) et dans les côtés extérieurs des parois latérales (3).

6. Pneumatique de véhicule selon la revendication 4 ou 5, **caractérisé en ce qu'**est sous-jacent à l'incurvation en forme d'arc de cercle du flanc (5a) de nervure radialement extérieur un arc de cercle avec un rayon (r₁), qui est plus grand en particulier d'au moins 0,20 mm que le rayon (r₂) dudit arc de cercle, qui est sous-jacent à l'incurvation en forme d'arc de cercle du flanc (5b) de nervure radialement intérieur, un arc de cercle avec un rayon (r₁), qui va de 1,30 mm à 2,50 mm, étant sous-jacent à l'incurvation en forme d'arc de cercle du flanc (5a) de nervure radialement extérieur et un arc de cercle avec un rayon (r₂), qui va de 1,10 mm à 1,50 mm; étant sous-jacent à l'incurvation en forme d'arc de cercle du flanc (5b) de nervure radialement intérieur.

7. Pneumatique de véhicule selon l'une des revendications 4 à 6, **caractérisé en ce que** les nervures (5) présentent une hauteur (h) de 1,00 mm à 2,50 mm, en particulier de 1,30 mm à 1,70 mm.

8. Pneumatique de véhicule selon l'une des revendications 4 à 7, lequel est un pneumatique de véhicule utilitaire, **caractérisé en ce qu'**un arc de cercle avec un rayon (R) de 150,00 mm à 200,00 mm est sous-jacent à l'autre section (3b) de la paroi latérale (3) incurvée en forme d'arc de cercle.
